# FASCICULE DE BREVET EUROPEEN

(11) **EP 1 460 298 B1**
(45) Date de publication et mention de la délivrance du brevet: **18.07.2007**
(21) Numéro de dépôt: 04290625.5
(22) Date de dépôt: 08.03.2004
(51) Int. Cl.: F16D 23/06

(54) **Synchroniseur de boîte de vitesses pour véhicules automobiles**
Synchronisierungsvorrichtung eines Getriebes eines Kraftfahrzeugs
Synchromesh for gearboxes for motor vehicle

(30) Priorité: 20.03.2003 FR 0303418
(43) Date de publication de la demande: 22.09.2004
(73) Titulaire: Peugeot Citroën Automobiles S.A., 78140 Vélizy Villacoublay (FR)
(72) Inventeur: Wascheul, Michael, 78260 Acheres (FR)
(74) Mandataire: Thinat, Michel

(56) Documents cités:
- EP-A- 1 298 340
- DE-A- 19 941 794
- US-A- 5 651 435

## Description

La présente invention concerne un synchroniseur de boîte de vitesses pour véhicules automobiles.

Elle vise en particulier un synchroniseur double d'une telle boîte de vitesses.

On connaît par DE-A-19941794 un tel synchroniseur du type comprenant au moins un pignon de transmission à couronne dentée de crabotage monté libre en rotation sur un arbre ; un moyeu solidaire de l'arbre ; un manchon de crabotage monté fixe en rotation sur le moyeu par engrènement et pouvant être déplacé axialement relativement au moyeu entre une position de repos relativement distante du pignon de transmission et une position d'engagement avec la couronne dentée de ce pignon ; au moins une bague de synchronisation solidaire en rotation du moyeu, axialement mobile entre le moyeu et le pignon de transmission et pouvant être engagée par friction avec le pignon de transmission lorsque la bague de synchronisation est poussée axialement par des moyens d'entraînement qui comprennent des ensembles formant poussoirs radiaux à billes engagés respectivement dans des logements radiaux réalisés sur la périphérie externe du moyeu dans le plan médian de ce dernier et régulièrement espacés autour de l'axe de rotation de l'arbre, chaque logement radial étant réalisé axialement au travers d'une paroi formant âme du moyeu et présentant en section transversale une forme en T dont la partie verticale reçoit un pied en forme de douille cylindrique d'un ensemble formant poussoir radial contenant un ressort de compression et une bille sollicitée par le ressort sur une rampe d'armement faisant partie des moyens d'entraînement et formée dans la face intérieure du manchon de crabotage, la partie transversale du T du logement radial reçevant une tête de support du pied de l'ensemble formant poussoir radial en forme générale de parallélépipède rectangle défini par deux pattes latérales symétriques au plan médian de part et d'autre de la paroi formant âme du moyeu et deux parois en bout prolongées en parties inférieures par deux pattes recourbées l'une vers l'autre de guidage axial de l'ensemble formant poussoir radial et reposant respectivement sur deux surfaces de guidage radialement externes de raccordement des parties verticale et transversale du T du logement de l'ensemble formant poussoir radial de façon à guider axialement ce dernier vers le pignon de transmission.

Dans le cas du synchroniseur double, des premier et second pignons de transmission sont montés libres en rotation sur l'arbre de part et d'autre du moyeu solidaire de celui-ci et des premier et second synchroniseurs, chacun identiques au synchroniseur décrit précédemment, se partagent le même moyeu et le même manchon de crabotage axialement mobile entre sa position de repos relativement distante des deux pignons de transmission et sa position d'engagement avec la couronne dentée de l'un ou l'autre des deux pignons de transmission suivant le sens de déplacement du manchon de crabotage. Les ensembles formant poussoirs radiaux se répartissent en première et seconde séries coopérant respectivement avec les première et seconde bagues de synchronisation des premier et second synchroniseurs et, à cet effet, ces ensembles, au nombre de six, sont montés en opposition, trois dans un sens et trois dans l'autre.

Cependant, pour garantir le bon fonctionnement du synchroniseur, il est nécessaire que chaque ensemble formant poussoir radial à billes soit monté dans le moyeu dans le sens correct afin de ne pas se trouver face à un toc d'indexage de chaque bague de synchronisation.

La présente invention propose un synchroniseur dans lequel les ensembles formant poussoirs radiaux à billes comportent des moyens de détrompage interdisant tout mauvais montage de chaque ensemble dans le moyeu et garantissant de la sorte le bon fonctionnement du synchroniseur.

A cet effet, le synchroniseur, du type défini au début de la description qui précède, est caractérisé en ce que l'une des parois en bout comportant une patte de guidage de chaque ensemble formant poussoir radial a une hauteur radiale supérieure à la hauteur radiale de la paroi en bout comportant l'autre patte de guidage et repose par sa patte de guidage sur sa surface de guidage d'une hauteur radiale inférieure à la hauteur radiale de l'autre surface de guidage de l'autre patte de guidage de façon à constituer des moyens détrompeurs évitant un montage incorrect de l'ensemble formant poussoir radial dans son logement du moyeu.

La patte latérale de chaque ensemble formant poussoir radial à bille située en regard de la bague de synchronisation a une hauteur radiale supérieure à la hauteur radiale de l'autre patte latérale et vient en butée, sous l'influence de l'effort de réaction de la bille sur une rampe de positionnement formée dans la face intérieure du manchon de crabotage, sur la face latérale correspondante de la paroi formant âme du moyeu délimitant axialement le logement en forme de T quand le manchon de crabotage est à sa position de repos, et est en appui sur la bague de synchronisation pour la déplacer axialement vers le pignon de transmission par l'intermédiaire de la rampe d'armement et de l'ensemble formant poussoir à bille lorsque le manchon de crabotage est déplacé vers ce pignon.

La patte latérale de plus grande hauteur radiale de chaque ensemble formant poussoir radial comporte sur sa face tournée vres le pignon correspondant un renflement s'insérant dans un logement complémentaire formé dans une butée d'entraînement de la bague de synchronisation.

Dans le cas du synchroniseur double, ce dernier est caractérisé en ce qu'il comprend des premier et second synchroniseurs chacun conforme au synchroniseur de l'invention décrit précédemment, les ensembles formant poussoirs radiaux se répartissant en première et seconde séries coopérant respectivement avec les première et seconde bagues de synchronisation des premier et second synchroniseurs, les première et seconde séries étant disposées autour de l'axe de rotation de l'arbre alternativement et régulièrement, la première série d'ensembles formant poussoirs radiaux pouvant déplacer axialement la première bague de synchronisation vers le premier pignon de transmission par leurs pattes latérales de plus grande hauteur situées en regard de la première bague de synchronisation, tandis que les pattes latérales de plus grande hauteur des ensembles formant poussoirs radiaux de la seconde série, situées en regard de la seconde bague de synchronisation, viennent en butée sur la face latérale correspondante de la paroi formant âme du moyeu pour bloquer axialement les ensembles de cette seconde série, et réciproquement.

De préférence, chaque série précitée comprend trois ensembles formant poussoir à billes.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en perspective éclatée d'un ensemble synchroniseur double conforme à l'invention ;
- la figure 2 est une vue partielle en perspective agrandie d'un ensemble du synchroniseur comprenant le moyeu muni de ses poussoirs radiaux à billes et deux bagues de synchronisation ;
- la figure 3 est une vue en coupe axiale du synchroniseur double de l'invention ;
- la figure 4 est une vue en perspective d'un ensemble formant poussoir radial à bille de l'invention ;
- la figure 5 est une vue en coupe suivant la ligne V-V de la figure 4 ;
- la figure 6 est une vue en coupe suivant la ligne VI-VI de la figure 4 ;
- la figure 7 est une vue de dessus de l'ensemble de la figure 4 ; et
- la figure 8 est une vue agrandie de face suivant la flèche VIII du moyeu de la figure 1 avec un ensemble formant poussoir à bille monté dans son logement du moyeu.

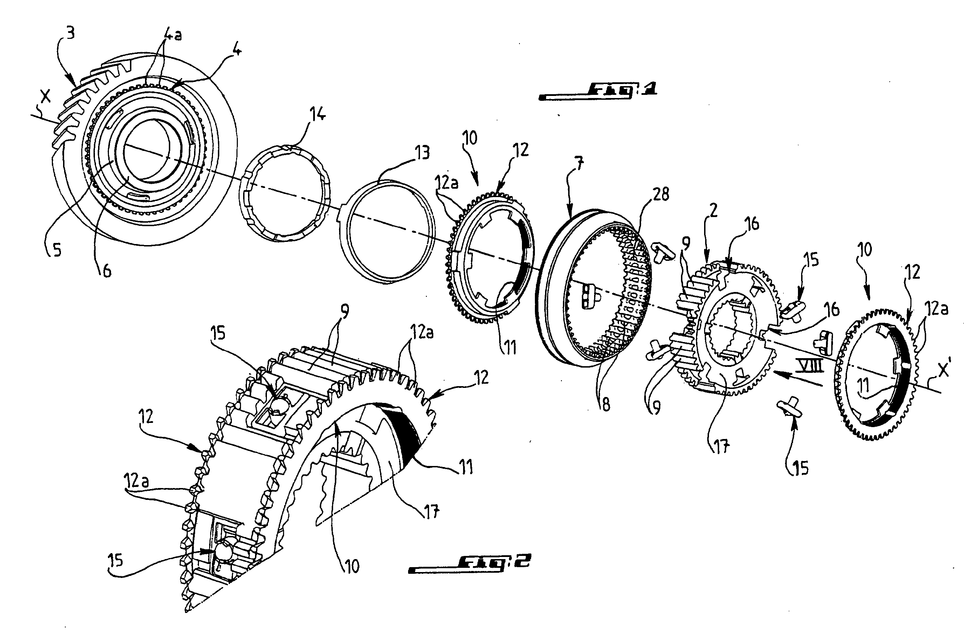

Le synchroniseur double tel que représenté aux figures comprend un arbre 1 sur lequel est fixé axialement et immobilé en rotation un moyeu 2 et deux pignons de transmission 3, dont seul le pignon de gauche est représenté en figure 1, disposés de part et d'autre du moyeu 2 par rapport au plan médian P du moyeu perpendiculaire à l'arbre 1. Les deux pignons 3 sont montés libres en rotation sur l'arbre 1 mais immobilisés axialement à celui-ci.

Chaque pignon 3 comporte, solidaire de son flanc en regard du moyeu 2, une couronne de crabotage 4 à denture externe 4a et une surface de friction tronconique 5 réalisée sur une partie centrale formant moyeu 6 du pignon 3 en étant orientée de façon ascendante dans le sens opposé au moyeu 2.

Le synchroniseur double comprend également un manchon de crabotage 7 pouvant être déplacé axialement relativement au moyeu 2 par une fourchette de commande (non représentée) engagée dans une gorge radialement externe 7a du manchon 7 qui comporte des dentures internes de crabotage 8 en engrènement avec des dentures 9 réalisées sur le pourtour externe du moyeu 2 pour assurer l'accouplement en rotation du manchon 7 au moyeu 2 tout en permettant le déplacement axial de ce manchon relativement au moyeu vers l'un ou l'autre des pignons de transmission 3.

Le synchroniseur double comprend de plus deux bagues de synchronisation 10 disposées symétriquement de part et d'autre du plan médian P en étant chacune située entre le moyeu 2 et un pignon 3. Chaque bague de synchronisation 10 comporte une surface tronconique interne de friction 11 pouvant coopérer avec la surface externe tronconique 5 de la partie centrale 6 du pignon correspondant 3 pour assurer un engagement par friction lorsque la bague de synchronisation 10 est déplacée axialement vers le pignon 3. Chaque bague de synchronisation 10 comprend également une couronne 12 à denture externe de crabotage 12a et située en regard de la couronne dentée 4 du pignon 3.

Le synchroniseur double comprend en outre deux paires de bagues tronconiques intermédiaires de synchronisation 13, 14 disposées symétriquement de part et d'autre du plan médian P, les deux bagues tronconiques 13, 14 de chaque paire étant situées entre la bague de synchronisation 10 et la partie centrale 6 correspondante du pignon 3 et pouvant être engagées l'une dans l'autre par friction lors du déplacement dans le sens correspondant du manchon de crabotage 7 pour assurer l'engagement par friction de la bague de synchronisation correspondant 10 à la surface externe tronconique 5 du pignon 3.

Lorsque le manchon de crabotage 7 est déplacé vers l'un ou l'autre des deux pignons de transmission 3, la bague de synchronisation correspondante 10 est poussée axialement par des moyens d'entraînement qui comprennent des ensembles formant poussoirs radiaux à billes 15 engagés respectivement dans des logements radiaux 16 réalisés sur la périphérie externe du moyeu 2 dans le plan médian P de ce dernier, les logements radiaux 16 étant régulièrement espacés autour de l'axe de rotation X-X' de l'arbre 1. Ainsi, une première série de trois ensembles formant poussoirs radiaux 15 coopère avec l'une des bagues de synchronisation 10, tandis qu'une seconde série de trois ensembles formant poussoirs radiaux 15 coopère avec l'autre bague de synchronisation 10, les ensembles formant poussoirs 15 des première et seconde séries étant répartis régulièrement autour de l'axe X-X' de l'arbre 1 alternativement, c'est-à-dire qu'un ensemble formant poussoir radial 15 de la première série est situé entre deux ensembles formant poussoirs radiaux 15 de la seconde série.

Comme cela ressort mieux des figures 1 et 8, chaque logement radial 16 s'étend axialement au travers d'une paroi 17 formant âme du moyeu 2 et présente en section transversale dans le plan médian P une forme en T dont la partie verticale ou jambe 16a reçoit un pied en forme de douille cylindrique 18 d'un ensemble formant poussoir radial 15 et la partie transversale 16b du T du logement radial 16 reçoit une tête 19 de l'ensemble 15 supportant le pied 18 de cet ensemble. La jambe 16a de logement du pied 18 est raccordée à la partie transversale 16b de logement de la tête 19 de l'ensemble 15 par deux surfaces radialement externes 16c espacées circonférentiellement l'une de l'autre dans le plan médian P et permettant le guidage axial de l'ensemble formant poussoir radial correspondant 15.

Chaque ensemble formant poussoir radial 15 a sa tête 19 généralement en forme de parallélépipède rectangle, dont les parois latérales sont définies par deux pattes 20, 21 symétriques au plan médian P de part et d'autre de la paroi 17 formant âme du moyeu 2 en position de repos du manchon de crabotage 7 et les deux parois en bout 22, 23 de raccordement des pattes latérales 20, 21 sont prolongées à leurs bords inférieurs respectivement par deux pattes 22a, 23a recourbées à angle droit l'une vers l'autre de chaque côté du pied cylindrique 18 qui s'étend parallèlement aux parois en bout 22, 23 au centre géométrique du rectangle défini par les parois 19, 21, 22 et 23. Les deux pattes 22a, 23a reposent respectivement sur les deux surfaces de guidage 16c du logement 16 recevant l'ensemble formant poussoir radial 15.

Le pied cylindrique 18 de chaque ensemble 15 contient en s'étendant coaxialement dans celui-ci un ressort de compression 24 et une bille 25 sollicitée élastiquement par le ressort 24 de façon à faire saillie de l'extrémité libre du pied 18 dont l'extrémité opposée est fermée par une paroi transversale 18a à perçage central et sur laquelle est en appui le ressort 24. La bille 25 est retenue partiellement à l'intérieur du pied 18 en faisant saillie de celui-ci par quatre pattes recourbées 18b solidaires de l'extrémité du pied 18 opposée à la paroi 18a. Le pied cylindrique 18 de chaque ensemble 15 est fixé à la tête 19 de cet ensemble par deux pattes de fixation 26 solidaires de l'extrémité du pied 18 de laquelle fait saillie la bille 25 et respectivement des deux bords opposés des deux parois latérales en forme de pattes 19, 21, les pattes 26 étant situées dans un même plan perpendiculaire à l'axe longitudinal du pied cylindrique 18 de part et d'autre de ce pied. La bille 25 de chaque ensemble 15, en position de repos, fait saillie au-dessus du plan transversal à l'axe longitudinal du pied 18 et passant par les bords supérieurs des parois 20 à 23 de la tête 19.

Les moyens d'entraînement de chaque bague de synchronisation 10 comprennent en plus des ensembles formant poussoirs radiaux à billes 15, des rampes d'armement 27 formées dans la face intérieure dentée du manchon de crabotage 7 et sur lesquelles sont en appui respectivement les billes 25 sous l'action des ressorts 24. Chaque rampe d'armement 27 est tournée vers le pignon correspondant 3 et sollicite axialement la bille associée 25 vers ce pignon quand le manchon de crabotage 7 est déplacé axialement vers le pignon 3. L'ensemble formant poussoir à billes 15 déplace à son tour la bague de synchronisation correspondante 10.

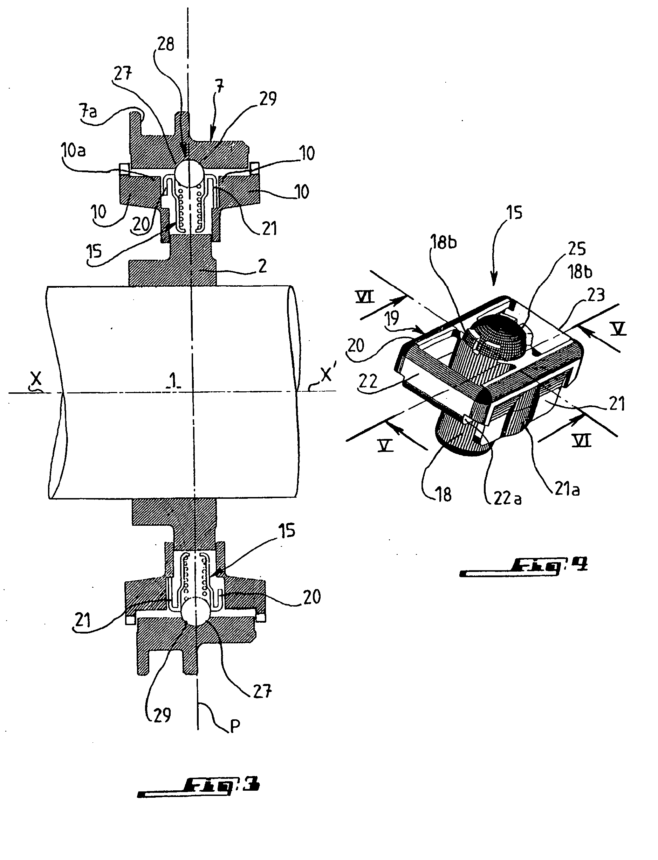

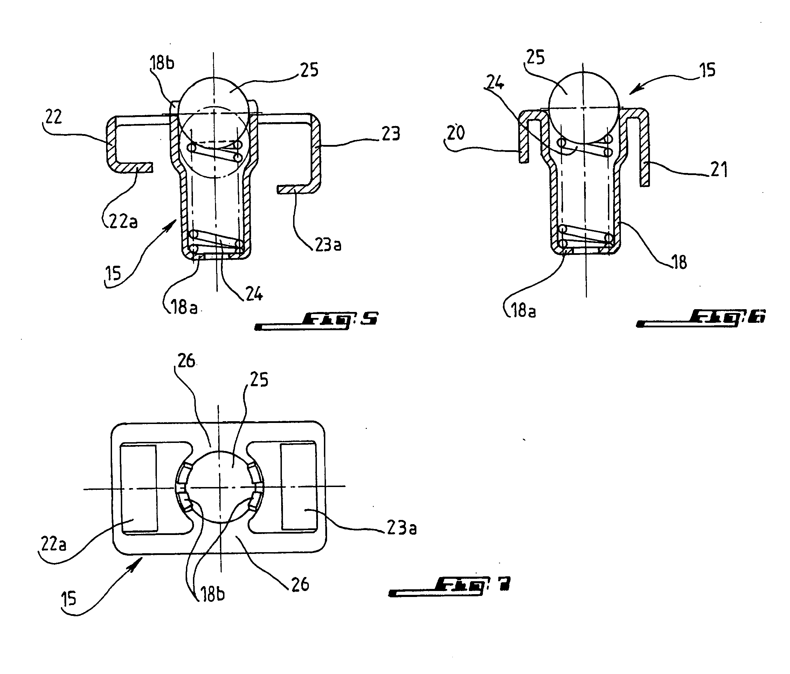

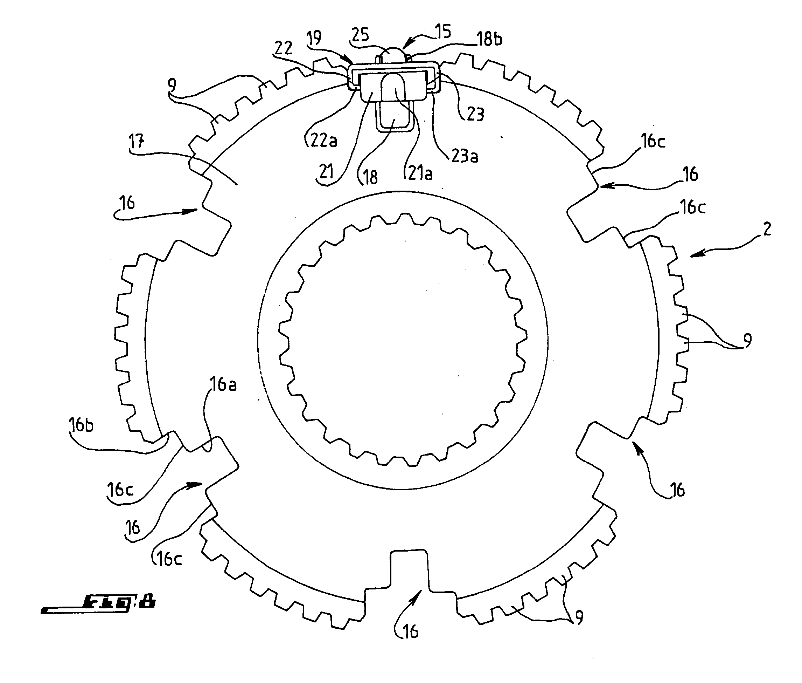

Comme cela ressort mieux de la figure 3, chaque rampe d'armement 27 est en fait réalisée dans une gorge 28 formée dans la face intérieure du manchon de crabotage 7 et dans laquelle les billes 27 viennent se loger quand le manchon 7 est dans sa position de repos. La figure 3 montre également que la surface de la gorge 28 opposée à la rampe d'armement 27 définit une rampe de positionnement 29 du manchon 7 dans sa position de repos.

Selon l'invention, l'une des parois en bout 22, 23 de la tête 19 de chaque ensemble formant poussoir radial 15, par exemple la paroi en bout 23, a une hauteur radiale supérieure à la hauteur radiale de l'autre paroi en bout 22 et la patte de guidage 23a de la paroi en bout 23 de plus grande hauteur radiale repose sur sa surface de guidage 16c qui présente une hauteur radiale inférieure à la hauteur radiale de l'autre surface de guidage 16c sur laquelle repose la patte de guidage 22a de la paroi en bout de plus faible hauteur radiale 22. Les différentes hauteurs radiales des parois en bout 22, 23 et des surfaces de guidage associées 16c constituent ainsi des moyens de détrompage permettant de monter correctement les ensembles formant poussoirs radiaux 15 dans leurs logements respectifs 16.

En outre, l'une des pattes latérales 19, 21 de chaque ensemble formant poussoir radial 15 située en regard de la bague de synchronisation correspondante 10, par exemple la patte latérale 21, a une hauteur radiale supérieure à la hauteur radiale de l'autre patte latérale, mais la hauteur de la patte latérale 21 est inférieure à la longueur du pied cylindrique 18. La patte latérale 21 de plus grande hauteur radiale vient en butée, sous l'influence de l'effort de réaction de la bille 25 sur la rampe de positionnement 29, sur la face latérale correspondante de la paroi 17 formant âme du moyeu 2 délimitant axialement le logement en forme de T 16 quand le manchon de crabotage 7 occupe sa position de repos. Quand le manchon de crabotage 7 est déplacé vers le pignon correspondant 3, la patte de plus grande hauteur radiale 21 de l'ensemble 15 pouvant se déplacer vers le pignon 3 vient en appui sur la bague de synchronisation correspondante 10 pour la déplacer axialement vers le pignon 3 par l'intermédiaire de la rampe d'armement 27 de l'ensemble formant poussoir à billes 15 qui se déplace axialement vers le pignon sur ses surfaces de guidage 16c. Chaque patte la plus haute 21 des ensembles formant poussoirs à billes 15 de la première série est donc disposée du côté du pignon 3 situé à droite par rapport aux figures 1 et 3 et symétriquement chaque patte la plus haute 21 des ensembles formant poussoirs à billes 15 de la seconde série est disposée du côté de l'autre pignon à gauche de ces figures. Chacune des pattes de plus grande hauteur 21 des ensembles 15 peut comprendre un renflement 21a formé sur la face de la patte 21 tournée vers le pignon correspondant 3 et le renflement 21 vient s'insérer dans un logement de forme conjuguée formé dans une butée d'entraînement 10a de la bague de synchronisation 10. Ces renflements 21a constituent un moyen de détrompage supplémentaire évitant de monter à l'envers les ensembles formant poussoirs radiaux 15 dans leurs logements respectifs 16.

Quand le manchon de crabotage 7 est déplacé vers le premier pignon de transmission 3, par exemple celui situé à droite par rapport aux figures 1 et 3, les rampes d'armement 27 entraînent les ensembles formant poussoirs à billes 15 de la première série, qui poussent à leur tour la bague de synchronisation 10. Par contre, les ensembles formant poussoirs à billes 15 de la seconde série sont bloqués dans leur mouvement axial par les pattes de plus grande hauteur 21 venant en butée sur la face latérale correspondante de la paroi 17 formant âme du moyeu 2. Bien entendu, les billes 25 des ensembles 15 de la seconde série s'effacent dans leurs pieds cylindriques 18 sous la pression des rampes de positionnement 29, permettant ainsi au manchon de crabotage 7 de coulisser librement.

Le synchroniseur double fonctionne vers le second pignon de transmission 3 de façon symétrique.

## Revendications

1. Synchroniseur de boîte de vitesses pour véhicules automobiles, comprenant au moins un pignon de transmission (3) à couronne dentée de crabotage (4) monté libre en rotation sur un arbre (1) ; un moyeu (2) solidaire de l'arbre (1) ; un manchon de crabotage (7) monté fixe en rotation sur le moyeu (2) par engrènement et pouvant être déplacé axialement relativement au moyeu (2) entre une position de repos relativement distante du pignon de transmission (3) et une position d'engagement avec la couronne dentée (4) du pignon de transmission (3) ; au moins une bague de synchronisation (10) solidaire en rotation du moyeu (2), axialement mobile entre le moyeu (2) et le pignon de transmission (3) et pouvant être engagée par friction avec le pignon de transmission (3) lorsque la bague de synchronisation (10) est poussée axialement par des moyens d'entraînement qui comprennent des ensembles formant poussoirs radiaux à billes (15) engagés respectivement dans des logements radiaux (16) réalisés sur la périphérie externe du moyeu (2) dans le plan médian (P) de ce dernier et régulièrement espacés autour de l'axe de rotation de l'arbre (1), chaque logement radial (16) étant réalisé axialement au travers d'une paroi (17) formant âme du moyeu (2) et présentant en section transversale une forme en T dont la partie verticale (16a) reçoit un pied (18) en forme de douille cylindrique d'un ensemble formant poussoir radial (15) contenant un ressort de compression (24) et une bille (25) sollicitée par le ressort (24) sur une rampe d'armement (27) faisant partie des moyens d'entraînement et formée dans la face intérieure du manchon de crabotage (7), la partie transversale (16b) du T du logement radial (16) recevant une tête (19) de support du pied (18) de l'ensemble formant poussoir radial (15) en forme générale de parallélépipède rectangle défini par deux pattes latérales (20,21) symétriques au plan médian (P) de part et d'autre de la paroi (17) formant âme du moyeu (2) en position de repos du manchon de crabotage (7) et deux parois en bout (22,23) prolongées en parties inférieures par deux pattes (22a,23a) recourbées l'une vers l'autre de guidage axial de l'ensemble formant poussoir radial (15) et reposant respectivement sur deux surfaces de guidage radialement externes (16c) de raccordement des parties verticale (16a) et transversale (16b) du T du logement (16) de l'ensemble formant poussoir radial (15) de façon à guider axialement ce dernier vers le pignon de transmission (3) ; **caractérisé en ce que** l'une (23) des parois en bout (22,23) comportant une patte de guidage (23a) de l'ensemble formant poussoir radial (15) a une hauteur radiale supérieure à la hauteur radiale de la paroi en bout (22) comportant l'autre patte de guidage (22a) et repose par sa patte de guidage (23a) sur sa surface de guidage (16c) de l'autre patte de guidage (22a) d'une hauteur radiale inférieure à la hauteur radiale de l'autre surface de guidage (16c) de façon à constituer des moyens détrompeurs évitant un montage incorrect de l'ensemble formant poussoir radial (15) dans son logement (16) du moyeu (2).

2. Synchroniseur selon la revendication 1, **caractérisé en ce que** la patte latérale (21) de chaque ensemble formant poussoir radial à bille (15) située en regard de la bague de synchronisation (10) a une hauteur radiale supérieure à la hauteur radiale de l'autre patte latérale (22) et vient en butée, sous l'influence de l'effort de réaction de la bille (25) sur une rampe de positionnement (29) formée dans la face intérieure du manchon de crabotage (7), sur la face latérale correspondante de la paroi (17) formant âme du moyeu (2) délimitant axialement le logement en forme de T (16) quand le manchon de crabotage (7) est à sa position de repos, et est en appui sur la bague de synchronisation (10) pour la déplacer axialement vers le pignon de transmission (3) par l'intermédiaire de la rampe d'armement (27) et de l'ensemble formant poussoir à bille (15) lorsque le manchon de crabotage (7) est déplacé vers ce pignon (3).

3. Synchroniseur selon la revendication 2, **caractérisé en ce que** la patte latérale (21) de plus grande hauteur radiale de chaque ensemble formant poussoir radial (15) comporte sur sa face tournée vers le pignon correspondant (3) un renflement (21a) s'insérant dans un logement complémentaire formé dans une butée d'entraînement (10a) de la bague de synchronisation (10).

4. Synchroniseur double de boîte de vitesses pour véhicule automobile, comprenant des premier et second pignons de transmission (3) montés libres en rotation sur un arbre (1) de part et d'autre d'un moyeu (2) solidaire de l'arbre (1), **caractérisé en ce qu'**il comprend des premier et second synchroniseurs chacun conforme à l'une des revendications précédentes, se partageant le même moyeu (2) et le même manchon de crabotage (7) axialement mobile entre sa position de repos relativement distante des deux pignons de transmission (3) et sa position d'engagement avec la couronne dentée (4) de l'un ou l'autre des deux pignons de transmission (3) suivant le sens de déplacement du manchon de crabotage (7), les ensembles formant poussoirs radiaux (15) se répartissant en première et seconde séries coopérant respectivement avec les première et seconde bagues de synchronisation (10) des premier et second synchroniseurs, les première et seconde séries étant disposées autour de l'axe de rotation de l'arbre (1) alternativement et régulièrement, la première série d'ensembles formant poussoirs radiaux (15) pouvant déplacer axialement la première bague de synchronisation (10) vers le premier pignon de transmission (3) par leurs pattes latérales de plus grande hauteur radiale (21) situées en regard de la première bague de synchronisation (10), tandis que les pattes latérales de plus grande hauteur radiale (21) des ensembles formant poussoirs radiaux (15) de la seconde série, situées en regard de la seconde bague de synchronisation (10), viennent en butée sur la face latérale correspondante de la paroi (17) formant âme du moyeu (2) pour bloquer axialement les ensembles (15) de cette seconde série, et réciproquement.

5. Synchroniseur selon la revendication 4, **caractérisé en ce que** chaque série précitée comprend trois ensembles formant poussoirs à billes (15).

## Claims

1. A gearbox synchromesh for motor vehicles comprising at least one transmission pinion (3) with a clutch toothed crown gear (4) mounted so as to freely rotate on a shaft (1); a hub (2) integral with the shaft (1); a clutch sleeve (7) mounted so as to rotatably fixed on the hub (2) by meshing and which may be axially displaced relatively to the hub (2) between a rest position relatively distant from the transmission pinion (3) and a position of engagement with the toothed crown (4) of the transmission pinion (3); at least one synchronization ring (10) firmly attached to the hub (2) in rotation, axially mobile between the hub (2) and the transmission pinion (3) and which may be engaged by friction with the transmission pinion (3) when the synchronization ring (10) is axially pushed by driving means which comprise assemblies forming radial ball pushers (15) engaged in radial housings (16) made on the external periphery of the hub (2) in the median plane (P) of the latter and regularly spaced around the axis of rotation of the shaft (1) respectively, each radial housing (16) being axially made through a wall (17) forming the core of the hub (2) and cross-sectionally having a T shape, the vertical portion (16a) of which receives a leg (18) in the form of a cylindrical bushing of an assembly forming a radial pusher (15) containing a compression spring (24) and a ball (25) stressed by the spring (24) on a pre-engagement ramp (27) being part of the driving means and formed in the inner face of the clutch sleeve (7), the transverse portion (16b) of the T of the radial housing (16) receiving a head (19) for supporting the leg (18) of the assembly forming a radial pusher (15) in the general shape of a right-angled parallelepiped defined by two side tabs (20, 21) symmetrical to the median plane (P) on either side of the wall (17) forming the core of the hub (2) in the rest position of the clutch sleeve (7) and two end walls (22, 23) extended in the lower portions with two tabs (22a, 23a) curved towards each other, for axially guiding the assembly forming a radial pusher (15) and lying on two radially external guiding surfaces (16c) for connecting the vertical (16a) and transverse (16b) portions of the T of the housing (16) of the assembly forming a radial pusher (15) respectively so as to axially guide the latter towards the transmission pinion (3); **characterized in that** one (23) of the end walls (22, 23) including a guiding tab (23a) of the assembly forming a radial pusher (15) has a radial height larger than the radial height of the end wall (22) including the other guiding tab (22a) and rests with its guiding tab (23a) on its guiding surface (16c) of the other guiding tab (22a) with a lower radial height than the radial height of the other guiding surface (16c) so as to form foolproofing means preventing improper mounting of the assembly forming a radial pusher (15) in its housing (16) of the hub (2).

2. The synchromesh according to claim 1, **characterized in that** the side tab (21) of each assembly forming a radial ball pusher (15) located facing the synchronization ring (10) has a radial height larger than the radial height of the other side tab (22) and will abut under the influence of the reaction force of the ball (25) on a positioning ramp (22) formed in the inner face of the clutch sleeve (7) on the corresponding side face of the wall (17) forming the core of the hub (2) axially delimiting the T-shaped housing (16) when the clutch sleeve (7) is in its rest position, and is supported on the synchronization ring (10) in order to axially displace it towards the transmission pinion (3) via the pre-engagement ramp (27) and the assembly forming a ball pusher (15) when the clutch sleeve (7) is displaced towards this pinion (3).

3. The synchromesh according to claim 2, **characterized in that** the side tab (21) with a larger radial height of each assembly forming a radial pusher (15) includes on its face turned towards the corresponding pinion (3) a bulge (21a) which is inserted into a complementary housing formed in a drive stop (10a) of the synchronization ring (10).

4. A dual gearbox synchromesh for a motor vehicle, comprising first and second transmission pinions (3) mounted so as to freely rotate on a shaft (1) on either side of a hub (2) integral with the shaft (1), **characterized in that** it comprises first and second synchromeshes each according to any of the preceding claims, sharing the same hub (2) and the same clutch sleeve (7) axially mobile between its rest position relatively distant from both transmission pinions (3) and its position for engaging with the toothed crown (4) of either one of the two transmission pinions (3) according to the displacement direction of the clutch sleeve (7), the assemblies forming radial pushers (15) being distributed as first and second series cooperating with the first and second synchronization rings (10) of the first and second synchromeshes respectively, the first and second series being alternately and regularly positioned around the axis of rotation of the shaft (1), the first series of assemblies forming radial pushers (15) being able to axially displace the first synchronization ring (10) towards the first transmission pinion (3) by their side tabs with larger radial height (21) located facing the first synchronization ring (10), while the side tabs with larger radial height (21) of the assemblies forming radial pushers (15) of the second series, located facing the second synchronization ring (10), will abut on the corresponding side face of the wall (17) forming the core of the hub (2) in order to axially block the assemblies (15) of this second series, and vice versa.

5. The synchromesh according to claim 4, **characterized in that** each aforementioned series comprises three assemblies forming ball pushers (15).

## Patentansprüche

1. Getriebe-Synchronisierungskupplungsnabe für Kraftfahrzeuge, umfassend mindestens ein frei auf einer Welle (1) drehendes Transmissionszahnrad (3) mit Differentialzahnkranz (4); eine mit der Welle (1) verbundene Nabe (2); eine starr durch Eingriffnahme auf der Nabe (2) drehende Differentialmuffe (7), die axial relativ zur Nabe (2) zwischen einer vom Transmissionszahnrad (3) relativ entfernten Ruhestellung und einer Eingriffsstellung mit dem Zahnkranz (4) des Transmissionszahnrads (3) verschiebbar ist; mindestens einen mit der Nabe (2) rotierend verbundenen Synchronisierring (10), der axial zwischen der Nabe (2) und dem Transmissionszahnrad (3) bewegbar ist und durch Reibung mit dem Transmissionszahnrad (3) beansprucht wird, wenn der Synchronisierring (10) axial von Antriebsmitteln gedrückt wird, die Baugruppen umfassen, die radiale Drücker mit Kugeln (15) bilden, die jeweils in radiale Aufnahmen (16) eingreifen, die auf der äußeren Peripherie der Nabe (2) in die Mittelebene (P) derselben eingearbeitet und regelmäßig beabstandet um die Rotationsachse der Welle (1) angeordnet sind, wobei jede radiale Aufnahme (16) axial durch eine Wand (17) realisiert ist, die den Kern der Nabe (2) bildet, und im Querschnitt eine T-Form aufweist, deren vertikaler Abschnitt (16a) einen Fuß (18) in Form einer zylindrischen Hülse einer einen radialen Drücker bildenden Baugruppe (15) aufnimmt, eine Druckfeder (24) und eine von der Feder (24) auf einer Spannrampe (27) beanspruchte Kugel (25) umfassend, die Teil der Antriebsmittel ist und in die Innenseite der Differentialmuffe (7) eingearbeitet ist, wobei der transversale Abschnitt (16b) des T der radialen Aufnahme (16) einen Kopf (19) zur Abstützung des Fußes (18) der den radialen Drücker (15) bildenden Baugruppe aufnimmt in allgemeiner Form eines rechteckigen Parallelepipeds, definiert durch zwei zur Mittelebene (P) symmetrische seitliche Plättchen (20, 21) an der einen und der anderen Seite der den Kern der Nabe (2) bildenden Wand (17) in Ruhestellung der Differentialmuffe (7), und zwei Wände am Ende (22, 23), die in unteren Abschnitten durch zwei Plättchen (22a, 23a) verlängert sind, die zueinander gebogen sind, zur axialen Führung der den radialen Drücker (15) bildenden Baugruppe und jeweils auf zwei radial externen Führungsfläche (16c) aufliegen zur Verbindung der vertikalen (16a) und transversalen (16b) Abschnitte des T der Aufnahme (16) der den radialen Drücker (15) bildenden Baugruppe, so dass dieses axial gegen das Transmissionszahnrad (3) gedrückt wird, **dadurch gekennzeichnet, dass** eine Wand (23) der Endwände (22, 23), die ein Führungsplättchen (23a) der den radialen Drücker (15) bildenden Baugruppe umfasst, eine radiale Höhe hat, die höher ist als die radiale Höhe der Endwand (22), die das andere Führungsplättchen (22a) umfasst, und mit ihrem Führungsplättchen (23a) auf ihrer Führungsfläche (16c) des anderen Führungsplättchens (22a) mit einer radialen Höhe, die geringer ist als die radiale Höhe der anderen Führungsfläche (16c) aufliegt, so dass Sicherungsmittel gebildet werden, die eine ungenaue Montage der den radialen Drücker (15) bildenden Baugruppe in seiner Aufnahme (16) der Nabe (2) verhindern.

2. Synchronisierungskupplungsnabe nach Anspruch 1, **dadurch gekennzeichnet, dass** das seitliche Plättchen (21) jeder einen radialen Drücker mit Kugel (15) bildenden Baugruppe, das sich gegenüber dem Synchronisierring (10) befindet, eine radiale Höhe hat, die höher ist als die radiale Höhe des anderen seitlichen Plättchens (22) und unter Einfluss der Reaktionskraft der Kugel (25) auf einer Positionierungsrampe (29) anschlägt, die in die untere Fläche der Differentialmuffe (7) eingearbeitet ist, auf der seitlichen Seite, die der Wand (17) entspricht (17), die den Kern der Nabe (2) bildet, und axial die T-förmige Aufnahme (16) begrenzt, wenn die Differentialmuffe (7) in ihrer Ruhestellung ist, und sich in Abstützung auf dem Synchronisierring (10) befindet, um ihn axial in Richtung des Transmissionszahnrads (3) mit Hilfe der Spannrampe (27) und der einen Kugeldrücker bildenden Baugruppe (15) zu verschieben, wenn die Differentialmuffe (7) in Richtung dieses Zahnrads (3) verschoben wird.

3. Synchronisierungskupplungsnabe nach Anspruch 2, **dadurch gekennzeichnet, dass** das seitliche Plättchen (21) größter radialer Höhe jeder einen radialen Drücker bildenden Baugruppe (15) auf seiner dem entsprechenden Zahnrad (3) zugewandten Seite eine Verdickung (21a) umfasst, die sich in eine komplementäre Aufnahme einpasst, die in ein Antriebsstück (10a) des Synchronisierrings (10) eingearbeitet ist.

4. Doppelte Getriebe-Synchronisierungskupplungsnabe für Kraftfahrzeuge, erste und zweite Transmissionszahnräder (3) umfassend, die frei drehend auf einer Welle (1) an der einen und der anderen Seite einer mit der Welle (1) verbundenen Nabe (2) montiert sind, **dadurch gekennzeichnet, dass** sie erste und zweite Synchronisierungskupplungsnaben umfasst, von denen jede einem der vorangehenden Ansprüche entspricht, die sich dieselbe Nabe (2) und dieselben Differentialmuffe (7) teilen, die zwischen ihrer von den zwei Transmissionszahnrädern (3) relativ entfernten Ruhestellung und ihrer Eingriffsstellung mit dem Zahnkranz (4) des einen oder anderen der zwei Transmissionszahnräder (3) gemäß der Bewegungsrichtung der Differentialmuffe (7) axial beweglich ist, wobei sich die die radialen Drücker bildenden Baugruppen (15) in erste und zweite Reihen aufteilen, die jeweils mit den ersten und zweiten Synchronisierringen (10) der ersten und zweiten Synchronisierungskupplungsnaben zusammenwirken, wobei die erste und die zweite Reihe abwechselnd und regelmäßig um die Rotationsachse der Welle (1) angeordnet sind, wobei die erste Reihe der radiale Drücker bildenden Baugruppen (15) in der Lage ist, den ersten Synchronisierring (10) in Richtung des ersten Transmissionszahnrads (3) durch ihre seitlichen Plättchen größerer radialer Höhe (21), die dem ersten Synchronisierring (10) gegenüberliegen, zu verschieben, währenddessen die seitlichen Plättchen größerer radialer Höhe (21) der radiale Drücker bildenden Baugruppen der zweiten Reihe, die dem zweiten Synchronisierring (10) gegenüberliegen, auf der entsprechenden seitlichen Seite der Wand (17) anschlagen, die den Kern der Nabe (2) bildet, um die Baugruppen (15) dieser zweiten Reihe zu blockieren und umgekehrt.

5. Synchronisierungskupplungsnabe nach Anspruch 4, **dadurch gekennzeichnet**, das jede vorgenannte Reihe drei Kugeldrücker bildende Baugruppen (15) umfasst.
